# EUROPEAN PATENT SPECIFICATION

(11) **EP 2 574 778 B1**
(45) Date of publication and mention of the grant of the patent: **09.09.2015**
(21) Application number: 11183289.5
(22) Date of filing: 29.09.2011
(51) Int. Cl.: F03D 11/00, G01M 13/02

(54) **A test rig and a method for testing gearboxes and electromechnical energy converters**
Prüfstand und Verfahren zum Prüfen von Getrieben und elektromechanischen Energiewandlern
Banc d'essai et procédé de test de boîtes de vitesses et convertisseurs d'énergie électro-mécaniques

(43) Date of publication of application: 03.04.2013
(73) Proprietor: Moventas Gears Oy, 40101 Jyväskylä (FI)
(72) Inventor: Toikkanen, Jari, 40950 Muurame (FI); Rummakko, Markku, 40520 Jyväskylä (FI)
(74) Representative: Berggren Oy Ab

(56) References cited:
- US-A1- 2009 107 255
- US-A1- 2009 173 148
- US-A1- 2011 041 624
- Walt Musial ET AL: "Wind Turbine Testing in the NREL Dynamometer Test Bed", , 4 May 2000 (2000-05-04), pages 1-10, XP55018820, Palm Springs, California Retrieved from the Internet: URL:http://www.nrel.gov/docs/fy00osti/2841 1.pdf [retrieved on 2012-02-08]
- Hsu Wen-Ko: "Measurements on a Wind Turbine Condition Monitoring Test Rig", , 1 September 2010 (2010-09-01), pages 1-18, XP55018822, Retrieved from the Internet: URL:http://www.aesieap0910.org/upload/File /PDF/4-Technical%20Sessions/TS13/TS1301/TS 1301_FP.pdf [retrieved on 2012-02-08]
- Athanassios Mihailidis ET AL: "A New System for Testing Gears Under Variable Torque and Speed", , 1 November 2009 (2009-11-01), pages 179-192, XP55018826, DOI: 10.2174/1874477X10902030179 Retrieved from the Internet: URL:http://www.benthamscience.com/meng/sam ples/meng2-3.tar/0002MENG.pdf [retrieved on 2012-02-08]

## Description

### Field of the invention

The invention relates to a test rig suitable for gearboxes and electromechanical energy converters. An electromechanical energy converter can be, for example but not necessarily, a nacelle of a wind power station. Furthermore, the invention relates to a method for testing gearboxes and electromechanical energy converters.

### Background

An electromechanical energy converter, such as for example a nacelle of a wind power station, comprises many times components such as a generator for converting mechanical energy to electrical energy and a gearbox for adapting the received mechanical power to a rotational speed area suitable for the generator. Furthermore, the electromechanical energy converter may comprise an electrical conversion device for converting the electrical power produced by the generator to a form suitable for further use, e.g. to be supplied to an electrical power network. The electrical conversion device may comprise, for example, a power electronic converter device and/or a transformer.

Despite the progress made in the last years regarding the analysis and simulation, experiments are still essential for investigating whether an electromechanical energy converter is able to fulfill the requirements set to it. A straightforward way to test electromechanical energy converters is to include the electromechanical energy converter under test in an electrical closed power loop, as illustrated by Walt Musial et al in "Wind Turbine Testing in the NREL Dynamometer Test Bed" published on 4 May 2000, where an electrical drive motor drives the input shaft of the electromechanical energy converter under test and the generator of the electromechanical energy converter is arranged to feed the power back to an electrical power network.

The requirements set to gearboxes of electromechanical energy converters are many times challenging to meet. The gearboxes should be efficient, strong, sufficiently small, quiet, and easy to manufacture. Furthermore, the gearboxes should be cost effective. There are many modes of failure that may appear when the load carrying capacity of a gearbox is exceeded. Tooth breakage, pittings and micro-pittings as well as excessive wear or even scuffing are the potential problems. Besides the load carrying capacity, there are also other important parameters like efficiency and dynamic behavior that need to be experimentally investigated. The maximum testing power that is needed for testing a gearbox of an electromechanical energy converter, e.g. a nacelle of a wind power station, is usually so high that it significantly exceeds the maximum power of the generator and the electrical conversion devices of the electromechanical energy converter. Therefore, the above presented test arrangement for testing the electromechanical energy converter as a whole is not suitable for testing the gearbox as a component. It would not be economically reasoned to size the generator and the electrical conversion devices of the electromechanical energy converter to be able to produce the required testing power to the gearbox of the said electromechanical energy converter.

An advantageous way to test gearboxes as components is to include the gearbox under test in a mechanical closed power loop constituted by the gearbox under test, an external gear system, and a power transmission shaft. A drive motor is used to rotate the system. The drive motor has to be rated according only to the mechanical power loss taking place in the mechanical closed power loop. Therefore, high testing power is achievable. The principle of the mechanical closed power loop is illustrated for example in the publication

US3112643 and Athanassios Mihailidis et al in "A New System for Testing Gears Under Variable Torque and Speed" publised on 1 November 2009.

A straightforward arrangement is to provide a testing yard with a test rig for testing electromechanical energy converters as a whole and with another test rig based on the mechanical closed power loop for testing gearboxes as components. A testing arrangement of the kind described above is, however, very room consuming and expensive. Therefore, test rigs which allow gearboxes to be tested as components and electromechanical energy converters as a whole are needed.

The publication US2011/0041624 discloses a test rig for testing a wind turbine gearbox wherein the wind turbine generator may be coupled to the wind turbine gearbox. The publication US2009/0107255 and Hsu Wen-Ko "Measurements on a Wind Turbine Condition Monitoring Test Rig" publised on 1 September 2010, disclose a test rig for testing wind turbine equipment comprising both the gearbox and the generator.

### Summary

The following presents a simplified summary in order to provide a basic understanding of some aspects of various invention embodiments. The summary is not an extensive overview of the invention. It is neither intended to identify key or critical elements of the invention nor to delineate the scope of the invention. The following summary merely presents some concepts of the invention in a simplified form as a prelude to a more detailed description of exemplifying embodiments of the invention.

In accordance with the first aspect of the present invention, there is provided a new test rig for testing a gearbox and an electromechanical energy converter. The test rig according to the invention comprises:
- a gear system comprising first and second rotatable connection interfaces suitable for being connected to input and output shafts of the gearbox under test and a third rotatable connection interface suitable for being connected to a shaft of the electromechanical energy converter under test,
- a power transmission shaft constituting, together with the gear system and the gearbox under test, a mechanical closed power loop when the gearbox under test is connected to the first and second rotatable connection interfaces,
- loading equipment for imposing test torque to the gearbox under test, and
- at least one drive motor for driving the test rig,
wherein the gear system is arranged to provide gear ratios so that the first rotatable connection interface is arranged to rotate many revolutions during a single revolution of the second rotatable connection interface and during a single revolution of the third rotatable connection interface.

The first rotatable connection interface of the test rig provides a higher speed-lower torque interface for the high speed side of a gearbox under test, the second rotatable connection interface provides a lower speed-higher torque interface for the low speed side of a gearbox under test, and the third rotatable connection interface provides a lower speed-higher torque interface for an electromechanical energy converter under test. The maximum torque of the second rotatable connection interface can be significantly higher than that of the third rotatable connection interface because the second rotatable connection interface belongs to the mechanical closed power loop. Therefore, the above-described test rig is suitable for both testing a gearbox as a component and also for testing an electromechanical energy converter, e.g. a nacelle of a wind power station, as a whole.

In accordance with the second aspect of the present invention, there is provided a new method for testing a gearbox and an electromechanical energy converter with a same test rig. The method according to the invention comprises:
- connecting input and output shafts of the gearbox under test to first and second rotatable connection interfaces of the test rig, the test rig constituting together with the gearbox under test at least one mechanical closed power loop,
- driving the test rig so as to supply mechanical power losses to the mechanical closed power loop,
- imposing test torque to the gearbox under test,
- connecting a shaft of the electromechanical energy converter under test to a third rotatable connection interface of the test rig, and
- driving the test rig so as to supply mechanical testing power to the electromechanical energy converter under test,
wherein the first rotatable connection interface rotates many revolutions during a single revolution of the second rotatable connection interface and during a single revolution of the third rotatable connection interface.

A number of exemplifying embodiments of the invention are described in accompanied dependent claims.

Various exemplifying embodiments of the invention both as to constructions and to methods of operation, together with additional objects and advantages thereof, will be best understood from the following description of specific exemplifying embodiments when read in connection with the accompanying drawings.

The verb "to comprise" is used in this document as an open limitation that neither excludes nor requires the existence of unrecited features. The features recited in depending claims are mutually freely combinable unless otherwise explicitly stated.

### Brief description of the figures

The exemplifying embodiments of the invention and their advantages are explained in greater detail below in the sense of examples and with reference to the accompanying drawings, in which:
figure 1 illustrates the principle of a test rig according to an embodiment of the invention for testing a gearbox and an electromechanical energy converter,
figure 2a shows a side view of a test rig according to an embodiment of the invention for testing a gearbox and an electromechanical energy converter, figure 2b shows the test rig seen above, and figure 2c shows the section taken along the line A-A shown in figures 2a and 2b, and
figure 3 shows a flow chart of a method according to an embodiment of the invention for testing a gearbox and an electromechanical energy converter.

### Description of the embodiments

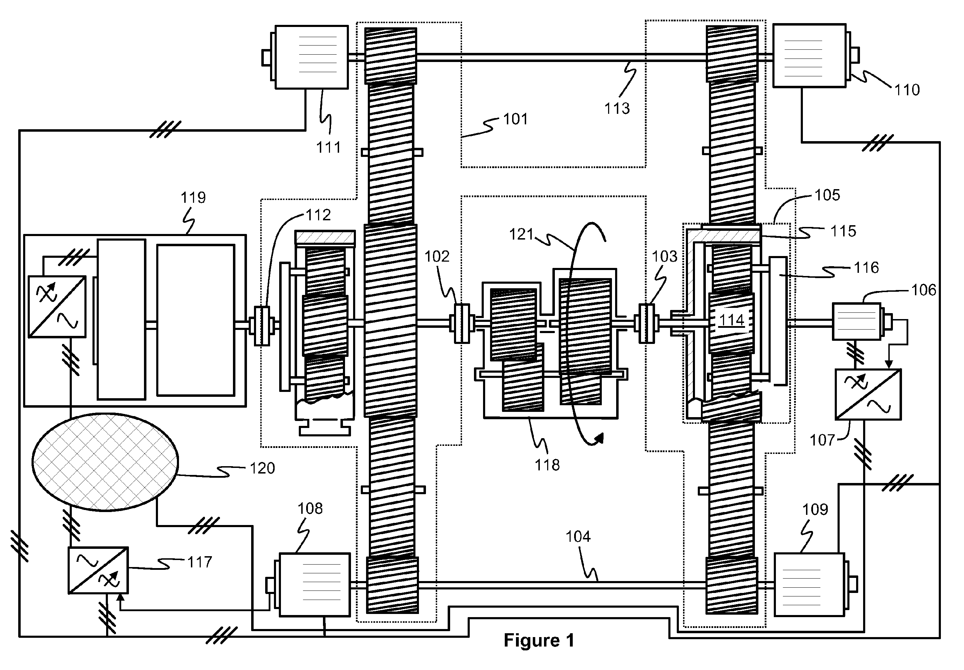

Figure 1 illustrates the principle of a test rig according to an embodiment of the invention for testing a gearbox 118 and an electromechanical energy converter 119, e.g. a nacelle of a wind power station. The test rig comprises a gear system 101 and power transmission shafts 104 and 113. The gear system comprises first and second rotatable connection interfaces 102 and 103, e.g. flanges, suitable for being connected to input and output shafts of the gearbox 118 under test and a third rotatable connection interface 112 suitable for being connected to a shaft of the electromechanical energy converter 119 under test. The gear system 101 and the power transmission shafts 104 and 113 constitute together with the gearbox 118 under test two mechanical closed power loops as illustrated in figure 1. The test rig comprises drive motors 108, 109, 110 and 111 for driving the mechanical closed power loops and/or the electromechanical energy converter 119 under test. The test rig comprises loading equipment for imposing test torque to the mechanically closed power loops so as to impose test torque to the gearbox 118 under test. Because the gearbox 118 under test is a part of the mechanically closed power loops, the sum of the power ratings of the drive motors 108-111 can be significantly lower than the maximum testing power of the gearbox under test. The gear system 101 is arranged to provide gear ratios so that the first rotatable connection interface 102 is arranged to rotate N₁ revolutions during a single revolution of the second rotatable connection interface 103 and N₂ revolutions during a single revolution of the third rotatable connection interface 112, where N₁ and N₂ are greater than unity. N₁ and N₂ can be, for example, at least 20 or at least 100.

The first rotatable connection interface 102 of the test rig provides a higher speed-lower torque interface for the high speed side of the gearbox 118 under test, the second rotatable connection interface 103 provides a lower speed-higher torque interface for the low speed side of a gearbox under test, and the third rotatable connection interface 112 provides a lower speed-higher torque interface for an electromechanical energy converter 119 under test. The maximum torque of the second rotatable connection interface 103 can be significantly higher than that of the third rotatable connection interface 112 because the second rotatable connection interface belongs to the mechanical closed power loops. Therefore, the above-described test rig is suitable for both testing the gearbox 118 as a component and also for testing the electromechanical energy converter 119, e.g. a nacelle of a wind power station, as a whole.

In the test rig illustrated in figure 1, there are two mechanical closed power loops in parallel. Thus, the power rating of the power transmission mechanism of each mechanical closed power loop can be significantly smaller than the maximum testing power of the gearbox 118 under test. In many practical installations, it is easier, more room saving, and more cost effective to construct two smaller power transmission mechanisms instead of a single big power transmission mechanism. It should be, however, noted that the number of the mechanical closed power loops could be also one or greater than two.

In the test rig illustrated in figure 1, the loading equipment for imposing the test torque to the gearbox 118 under test comprises a differential gear stage 105 having first and second rotatable elements 114 and 115 which form part of the mechanical closed power loops and whose mutual rotational speed difference depends on rotational speed of a third rotatable element 116 of the differential gear stage. The test rig is adapted to the gear ratio of the gearbox 118 under test by allowing the third rotatable element 116 of the differential gear stage to rotate at such a speed that the speed difference of the first and second rotatable elements 114 and 115 of the differential gear stage compensates the effect of the gear ratios of the other elements, including the gearbox under test, in the mechanical closed power loops. Hence, the necessary condition that the product of all gear ratios is unity in the mechanical closed power loops is fulfilled with the aid the differential gear stage. In the exemplifying case shown on figure 1, the differential gear stage is a planetary gear. The first and second rotatable elements 114 and 115 are the sun gear shaft of the planetary gear and the gear ring of the planetary gear, respectively. In the exemplifying construction shown in figure 1, the gear ring has gear teeth also on its outer periphery. The third rotatable element 116 of the differential gear stage 105 is the planet-wheel carrier of the planetary gear. It should be noted that the planetary gear is not the only possible choice for the differential gear stage. The differential gear stage could also be, for example, a spur-gear differential or a differential gear based on bevel gears.

In the test rig illustrated in figure 1, the loading equipment further comprises a controlling device connected to the third rotatable element 116 of the differential gear stage and arranged to control torque acting on the third rotatable element when the third rotatable element is rotating. By controlling the torque acting on the third rotatable element 116 it is possible to control the test torque imposed to the gearbox 118 under test. The controlling device comprises an electrical machine 106 and an electrical converter device 107. The electrical converter is arranged to control the electrical machine 106 on the basis of a difference between the torque of the electrical machine and a reference torque. In a test rig according to an exemplifying embodiment of the invention, the electrical converter device 107 is arranged to change the reference torque in response to a situation in which the rotational speed of the electrical machine 106 meets an upper speed limit or a lower speed limit. The reference torque is changed in the direction that the rotational speed is returned to a speed window defined with the upper and lower speed limits.

The electrical machine 106 can be an alternating current "AC" electrical machine and the electrical converter device 107 can be a frequency converter that is connected to a three-phase power supply network 120. An AC-electrical machine can be, for example, an induction machine or a permanent magnet synchronous machine. In order to achieve good control accuracy, the frequency converter can be arranged use vector control that is based on controlling not only frequency and amplitudes of voltages and currents but also instantaneous phases of the voltages and currents. Especially, if a tachometer is used, very good control accuracy is achievable. The electrical machine could as well be a direct current "DC" electrical machine and the converter device could be an AC-to-DC converter, e.g. a thyristor converter. In some applications, the controlling device connected to the third rotatable element 116 of the differential gear stage could be a simple brake but an inherent drawback of a brake is that it can produce only torque that is acting against a direction of rotation. An electrical machine can produce torque in both directions depending on whether the electrical machine operates as a motor or as a generator.

In a test rig according to an embodiment of the invention, the drive motors 108-111 that are arranged to drive the test rig are electrical motors that are supplied and controlled with an electrical converter device 117 arranged to control rotational speed of the electrical motors on the basis of a difference between the rotational speed of the electrical motors and a reference speed. In the exemplifying case shown in figure 1, the drive motors 108-111 are alternating current electrical motors and the electrical converter device 117 is a frequency converter. In order to achieve good speed control accuracy, the converter device 117 can be arranged use the vector control. Especially, if a tachometer is used, it is possible to achieve very good speed control accuracy. It is also possible that the electrical motor is an AC-electrical motor that is directly connected to the power supply network 120. In this case, the rotational speeds of the drive motors 101-111 are determined by the frequency of the supply network but there can be significant fluctuations in the rotational speeds when there are dynamical changes in instantaneous loading conditions.

In a test rig according to another embodiment of the invention, the loading equipment comprises a hydraulically operated piston for pushing an obliquely toothed gearwheel in its axial direction with respect to its neighboring gearwheel that is also obliquely toothed. As the gearwheel and its neighboring gearwheel are obliquely toothed, an axial movement of the gearwheel with respect to its neighboring gearwheel causes rotation and thus imposes torque to gearbox under test. It is also possible to generate the test torque by turning the whole gearbox under test as illustrated by the arrow 221 in figure 1. The gearbox under test can be turned e.g. with the aid of a hydraulically operated piston. This method is, however, not suitable for a gearbox whose gear ratio is 1:1. Furthermore, if the input and output shafts of the gearbox under test are not in the same spatial line, cardan joints or other suitable means are needed for compensating the radial movement of at least one of the input and output shafts. It is also possible to have two gearboxes in a back-to-back connection between the rotatable connection interfaces 102 and 103. The test torque can be imposed to these two gearboxes under test by turning the gearboxes in mutually opposite directions with e.g. hydraulically operated pistons.

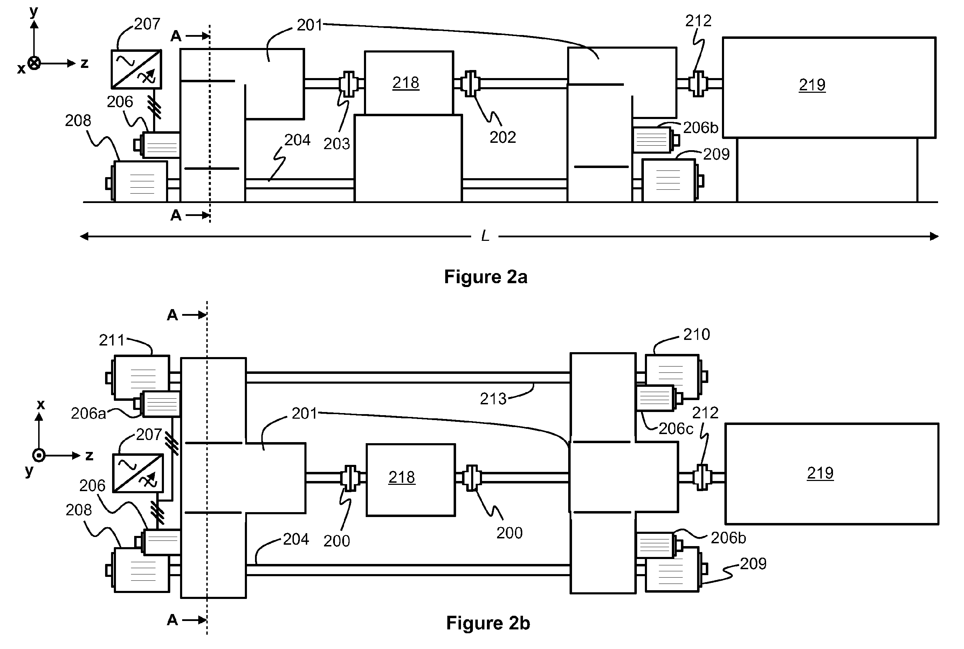

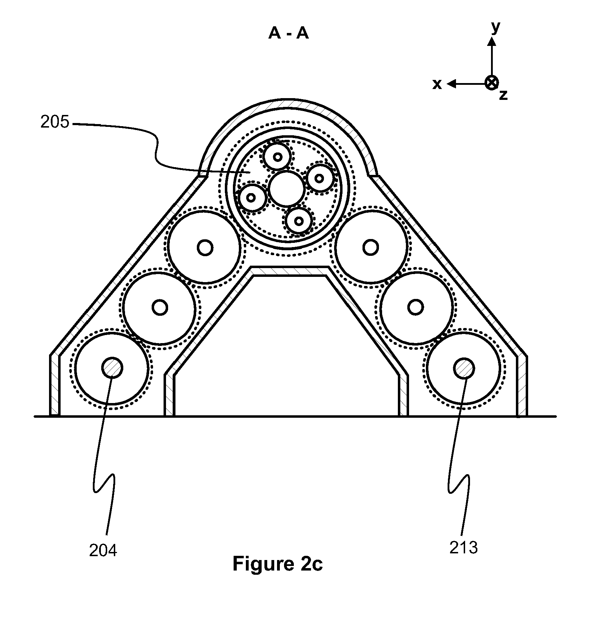

Figure 2a shows a side view of a test rig according to an embodiment of the invention for testing a gearbox 218 and an electromechanical energy converter 219. Figure 2b shows the above-mentioned test rig seen above and figure 2c shows the section taken along the line A-A shown in figures 2a and 2b. The test rig comprises a gear system 201 and power transmission shafts 204 and 213. The gear system comprises first and second rotatable connection interfaces 202 and 203 suitable for being connected to input and output shafts of the gearbox 218 under test and a third rotatable connection interface 212 suitable for being connected to a shaft of the electromechanical energy converter 219 under test. The gear system 201 and the power transmission shafts 204 and 213 constitute together with the gearbox 218 under test two mechanical closed power loops as illustrated in figure 2b. The test rig comprises drive motors 208, 209, 210 and 211 for driving the mechanical closed power loops and/or the electromechanical energy converter 219 under test. The test rig comprises loading equipment for imposing test torque to the mechanically closed power loops so as to impose test torque to the gearbox 218 under test. The gear system 201 is arranged to provide gear ratios so that the first rotatable connection interface 202 is arranged to rotate N₁ revolutions during a single revolution of the second rotatable connection interface 203 and N₂ revolutions during a single revolution of the third rotatable connection interface 112, where N₁ and N₂ are greater than unity. The electromechanical energy converter 219 under test can be for example a nacelle of a wind power station and the gearbox 218 can be a gearbox similar to that of the nacelle. The ratings of the first rotatable connection interface 202 can be e.g. 24 MW, 1080 revolutions/min, and 212 kNm, the ratings of the second rotatable connection interface 203 can be e.g. 24 MW, 9 revolutions/min, and 25500 kNm, and ratings of the third rotatable connection interface 212 can be e.g. 12 MW, 9 revolutions/min, and 12250 kNm. The total length L of the testing area can be about 60 m. Hence, it is straightforward to see that considerable savings in the floor area of a testing yard can be achieved when the same test rig can be used for both testing a gearbox as a component and for testing an electromechanical energy converter as a whole.

The loading equipment comprises a differential gear stage 205 illustrated in the section A-A in figure 2c where gear teeth are depicted with dashed lines. The differential gear stage 205 can be similar to the differential gear stage 105 shown in figure 1. The loading equipment further comprises electrical machines 206 and 206a that are connected to the planet-wheel carrier of the differential gear stage 205. The electrical machines 206 and 206a are supplied and controlled with an electrical converter device 207. The other end of the test rig may also comprise a differential gear stage which is used for generating the test torque and/or for adapting gear ratios and which is controlled with electrical machines 206b and 206c.

In principle, it is possible to test both the gearbox 218 and the electromechanical energy converter 219 simultaneously because, due to the mechanical closed power loops, most of the mechanical power of the drive motors 208-211 can be directed to the electromechanical energy converter under test even if the gearbox is under test too. In many practical cases, the gearbox to be tested is, however, the gearbox of the electromechanical energy converter to be tested. In these cases, simultaneous testing of the gearbox and the electromechanical energy converter is naturally not possible.

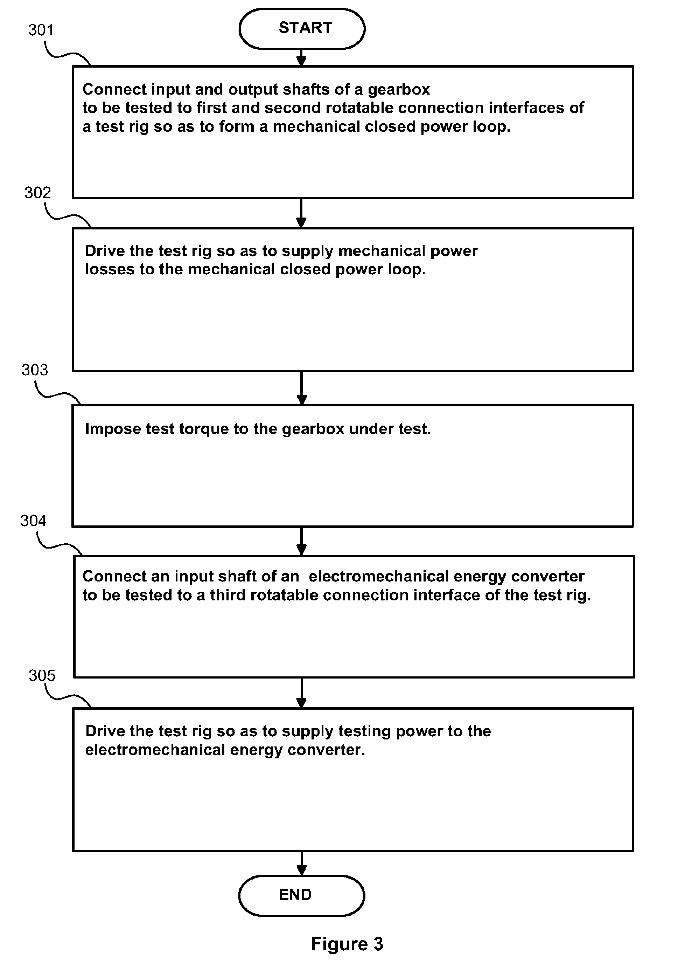

Figure 3 shows a flow chart of a method according to an embodiment of the invention for testing a gearbox and an electromechanical energy converter with a same test rig. The method comprises:
- action 301: connecting input and output shafts of the gearbox under test to first and second rotatable connection interfaces of the test rig, the test rig constituting together with the gearbox under test at least one mechanical closed power loop,
- action 302: driving the test rig so as to supply mechanical power losses to the mechanical closed power loop,
- action 303: imposing test torque to the gearbox under test,
- action 304: connecting a shaft of the electromechanical energy converter under test to a third rotatable connection interface of the test rig, and
- action 305: driving the test rig so as to supply mechanical testing power to the electromechanical energy converter under test,
wherein the first rotatable connection interface rotates many revolutions during a single revolution of the second rotatable connection interface and during a single revolution of the third rotatable connection interface.

The actions 302, 303, and 305 take place simultaneously if the gearbox and the electromechanical energy converter are tested simultaneously.

A method according to an embodiment of the invention further comprises adapting the gear ratio of the test rig to correspond to the gear ratio of the gearbox under test with the aid of a differential gear stage having first and second rotatable elements which form part of the mechanical closed power loop and whose mutual rotational speed difference depends on rotational speed of a third rotatable element of the differential gear stage. In the method according to this embodiment of the invention, the test torque is imposed to the gearbox under test by controlling the torque acting on the third rotatable element when the third rotatable element is rotating.

In a method according to an embodiment of the invention, the torque acting on the third rotatable element is controlled with a system comprising:
- an electrical machine, and
- an electrical converter device that controls the electrical machine on the basis of a difference between the torque of the electrical machine and a reference torque.

The differential gear stage can be, for example, a planetary gear so that the sun gear shaft and a gear ring of the planetary gear are the first and second rotatable elements, respectively, and a planet-wheel carrier of the planetary gear is the third rotatable element. The electrical machine can be an alternating current electrical machine and the electrical converter device can be a frequency converter.

In a method according to an embodiment of the invention, the reference torque is changed in response to a situation in which the rotational speed of the electrical machine meets an upper speed limit or a lower speed limit. The reference torque is changed in the direction that the rotational speed is returned to a speed window defined with the upper and lower speed limits.

In a method according to an embodiment of the invention, the test rig is driven with one or more electrical motors and rotational speed of the electrical motors is controlled on the basis of a difference between the rotational speed of the electrical motors and a reference speed. The electrical motors can be alternating current electrical motors that are supplied and controlled with a frequency converter.

The specific examples provided in the description given above should not be construed as limiting. Therefore, the invention is not limited merely to the embodiments described above.

## Claims

1. A test rig for testing a gearbox and an electromechanical energy converter, the test rig comprising:
- a gear system (101, 201) comprising first and second rotatable connection interfaces (102, 103, 202, 203) suitable for being connected to input and output shafts of the gearbox under test,
- a power transmission shaft (104, 204) constituting, together with the gear system and the gearbox under test, a mechanical closed power loop when the gearbox under test is connected to the first and second rotatable connection interfaces,
- loading equipment (105-107, 205-207) for imposing test torque to the gearbox under test, and
- at least one drive motor (108-111, 208-211) for driving the test rig,
**characterized in that** the gear system further comprises a third rotatable connection interface (112, 212) suitable for being connected to a shaft of the electromechanical energy converter under test, and the gear system is arranged to provide gear ratios so that the first rotatable connection interface is arranged to rotate many revolutions during a single revolution of the second rotatable connection interface and during a single revolution of the third rotatable connection interface.

2. A test rig according to claim 1, wherein the first rotatable connection interface is arranged to rotate at least 20 revolutions during a single revolution of the second rotatable connection interface and during a single revolution of the third rotatable connection interface.

3. A test rig according to claim 1, wherein the first rotatable connection interface is arranged to rotate at least 100 revolutions during a single revolution of the second rotatable connection interface and during a single revolution of the third rotatable connection interface.

4. A test rig according to any of claims 1-3, wherein the test rig comprises at least one other power transmission shaft (113, 213) constituting, together with the gear system and the gearbox under test, at least one other mechanical closed power loop.

5. A test rig according to any of claims 1-4, wherein the loading equipment comprises:
- a differential gear stage (105, 205) for adapting the gear ratio of the test rig to correspond to the gear ratio of the gearbox under test, the differential gear stage comprising first and second rotatable elements (114, 115) which form part of the mechanical closed power loop and whose mutual rotational speed difference depends on rotational speed of a third rotatable element (116) of the differential gear stage, and
- a controlling device (106, 107, 206, 207) connected to the third rotatable element of the differential gear stage and arranged to control torque acting on the third rotatable element when the third rotatable element is rotating so as to impose the test torque to the gearbox under test.

6. A test rig according to claim 5, wherein the differential gear stage (105, 205) is a planetary gear, a sun gear shaft and a gear ring of the planetary gear being the first and second rotatable elements and a planet-wheel carrier of the planetary gear being the third rotatable element.

7. A test rig according to claim 5, wherein the controlling device comprises an electrical machine (106, 206) and an electrical converter device (107, 207) arranged to control the electrical machine on the basis of a difference between the torque of the electrical machine and a reference torque.

8. A test rig according to claim 7, wherein the electrical converter device is arranged to change the reference torque in response to a situation in which the rotational speed of the electrical machine meets an upper speed limit or a lower speed limit, the reference torque being changed in a direction that the rotational speed is returned to a speed window defined with the upper and lower speed limits.

9. A test rig according to any of claims 1-8, wherein the drive motor (108-111) is an electrical motor and the test rig comprises another electrical converter device (117) arranged to control rotational speed of the electrical motor on the basis of a difference between the rotational speed of the electrical motor and a reference speed.

10. A test rig according to any of claims 7-9, wherein the electrical machine is an alternating current electrical machine and the electrical converter device is a frequency converter.

11. A method for testing a gearbox and an electromechanical energy converter with a same test rig, the method comprising:
- connecting (301) input and output shafts of the gearbox under test to first and second rotatable connection interfaces of the test rig, the test rig constituting together with the gearbox under test at least one mechanical closed power loop,
- driving (302) the test rig so as to supply mechanical power losses to the mechanical closed power loop, and
- imposing (303) test torque to the gearbox under test,
**characterized in that** the method further comprises:
- connecting (304) a shaft of the electromechanical energy converter under test to a third rotatable connection interface of the test rig, and
- driving (305) the test rig so as to supply mechanical testing power to the electromechanical energy converter under test,
wherein the first rotatable connection interface rotates many revolutions during a single revolution of the second rotatable connection interface and during a single revolution of the third rotatable connection interface.

12. A method according to claim 11, wherein the method further comprises adapting the gear ratio of the test rig to correspond to the gear ratio of the gearbox under test with the aid of a differential gear stage having first and second rotatable elements which form part of the mechanical closed power loop and whose mutual rotational speed difference depends on rotational speed of a third rotatable element of the differential gear stage, and wherein the test torque is imposed to the gearbox under test by controlling torque acting on the third rotatable element when the third rotatable element is rotating.

13. A method according to claim 12, wherein the differential gear stage is a planetary gear, a sun gear shaft and a gear ring of the planetary gear being the first and second rotatable elements and a planet-wheel carrier of the planetary gear being the third rotatable element.

14. A method according to claim 12, wherein the torque acting on the third rotatable element is controlled with a system comprising an electrical machine and an electrical converter device that controls the electrical machine on the basis of a difference between the torque of the electrical machine and a reference torque.

15. A method according to claim 14, wherein the reference torque is changed in response to a situation in which the rotational speed of the electrical machine meets an upper speed limit or a lower speed limit, the reference torque being changed in a direction that the rotational speed is returned to a speed window defined with the upper and lower speed limits.

## Patentansprüche

1. Prüfstand zum Testen eines Getriebes und eines elektromechanischen Energieumwandlers, der Prüfstand mit:
- einem Getriebesystem (101,201) mit ersten und zweiten drehbaren Verbindungsschnittstellen (102, 103, 202, 203), die dazu geeignet sind, mit Eingabe- und Ausgabewellen des Getriebes, das zu testen ist, verbunden zu werden,
- einer Leistungsübertragungswelle (104, 204), die zusammen mit dem Getriebesystem und dem zu testenden Getriebe eine geschlossene mechanische Leistungsschleife bildet, wenn das zu testende Getriebe mit der ersten und der zweiten drehbaren Verbindungsschnittstelle verbunden wird,
- einer Belastungseinrichtung (105 - 107, 205 - 207) zum Ausüben eines Testdrehmoments auf das zu testende Getriebe und
- wenigstens einem Antriebsmotor (108 - 111, 208 - 211) zum Antreiben des Prüfstands,
**dadurch gekennzeichnet, dass** das Getriebesystem ferner eine dritte drehbare Verbindungsschnittstelle (112, 212) aufweist, die dazu geeignet ist, mit einer Welle des zu testenden elektromechanischen Energieumwandlers verbunden zu werden, und dass das Getriebesystem dazu ausgestaltet ist, Übersetzungsverhältnisse so bereitzustellen, dass die erste drehbare Verbindungsschnittstelle dazu ausgestaltet ist, sich um mehrere Umdrehungen während einer einzelnen Umdrehung der zweiten drehbaren Verbindungsschnittstelle und während einer einzelnen Umdrehung der dritten drehbaren Verbindungsschnittstelle zu drehen.

2. Prüfstand nach Anspruch 1, bei dem die erste drehbare Verbindungsschnittstelle dazu ausgestaltet ist, sich um wenigstens 20 Umdrehungen während einer einzelnen Umdrehung der zweiten drehbaren Verbindungsschnittstelle und während einer einzelnen Umdrehung der dritten drehbaren Verbindungsschnittstelle zu drehen.

3. Prüfstand nach Anspruch 1, bei dem die erste drehbare Verbindungsschnittstelle dazu ausgestaltet ist, sich um wenigstens 100 Umdrehungen während einer einzelnen Umdrehung der zweiten drehbaren Verbindungsschnittstelle und während einer einzelnen Umdrehung der dritten drehbaren Verbindungschnittstelle zu drehen.

4. Prüfstand noch einem der Ansprüche 1 bis 3, wobei der Prüfstand wenigstens eine andere Leistungsübertragungswelle (113, 213) aufweist, die zusammen mit dem Getriebesystem und dem zu testenden Getriebe wenigstens eine andere geschlossene mechanische Leistungsschleife bildet.

5. Prüfstand nach einem der Ansprüche 1 bis 4, bei dem die Belastungseinrichtung aufweist:
- eine Differenzialgetriebestufe (105,205), um das Übersetzungsverhältnis des Prüfstands so anzupassen, dass es dem Übersetzungsverhältnis des zu testenden Getriebes entspricht, wobei die Differenzialgetriebestufe erste und zweite drehbare Elemente (114,115) aufweist, die einen Teil der geschlossenen mechanischen Leistungsschleife bilden und deren jeweiliger Drehgeschwindigkeitsunterschied von der Drehgeschwindigkeit eines dritten drehbaren Elements (116) der Differenzialgetriebestufe abhängt, und
- eine Steuerungseinrichtung (106, 107, 206, 207), die mit dem dritten drehbaren Element der Differenzialgetriebestufe verbunden ist und die dazu ausgestaltet ist, ein Drehmoment zu steuern, das auf das dritte drehbare Element wirkt, wenn das dritte drehbare Element sich dreht, um das Testdrehmoment auf das zu testende Getriebe auszuüben.

6. Prüfstand nach Anspruch 5, bei dem die Differenzialgetriebestufe (105,205) ein Planetengetriebe ist, wobei eine Sonnenradwelle und ein Zahnkranz des Planetengetriebes die ersten und zweiten drehbaren Elemente sind und wobei ein Planetenradträger des Planetengetriebes das dritte drehbare Element ist.

7. Prüfstand nach Anspruch 5, bei dem die Steuerungseinrichtung eine elektrische Maschine (106, 206) und eine elektrische Umwandlungseinrichtung (107,207) aufweist, die dazu ausgestaltet sind, die elektrische Maschine auf der Basis einer Differenz zwischen dem Drehmoment der elektrischen Maschine und einem Bezugsdrehmoment zu steuern.

8. Prüfstand nach Anspruch 7, bei dem die elektrische Umwandlungseinrichtung dazu ausgestaltet ist, das Bezugsdrehmoment aufgrund einer Situation zu verändern, in der die Drehgeschwindigkeit der elektrischen Maschine eine obere Geschwindigkeitsgrenze oder eine untere Geschwindigkeitsgrenze erreicht, wobei das Bezugsdrehmoment in einer Richtung verändert wird, dass die Drehgeschwindigkeit zu einem Geschwindigkeitsfenster zurückgeführt wird, das mit den oberen und unteren Geschwindigkeitsgrenzen definiert wird.

9. Prüfstand nach einem der Ansprüche 1 bis 8, bei dem der Antriebsmotor (108 - 111) ein elektrischer Motor ist und der Prüfstand eine andere elektrische Umwandlungseinrichtung (117) aufweist, die dazu ausgestaltet ist, eine Drehgeschwindigkeit des elektrischen Motors auf der Grundlage einer Differenz zwischen der Drehgeschwindigkeit des elektrischen Motors und einer Bezugsgeschwindigkeit zu steuern.

10. Prüfstand nach einem der Ansprüche 7 bis 9, bei dem die elektrische Maschine eine elektrische Wechselstrommaschine ist und die elektrische Umwandlungseinrichtung eine Frequenzumwandlungseinrichtung ist.

11. Verfahren zum Testen eines Getriebes und eines elektromechanischen Energieumwandlers mit einem gleichen Prüfstand, das Verfahren mit:
- dem Verbinden (301) von Eingabe- und Ausgabewellen des zu testenden Getriebes mit ersten und zweiten drehbaren Verbindungsschnittstellen des Prüfstands, wobei der Prüfstand zusammen mit dem zu testenden Getriebe wenigstens eine geschlossene mechanische Leistungsschleife bildet,
- dem Antreiben (302) des Prüfstands, sodass mechanische Leistungsverluste zu der geschlossenen mechanischen Leistungsschleife zugeführt werden, und
- dem Ausüben (303) eines Testdrehmoments auf das zu testende Getriebe,
**dadurch gekennzeichnet, dass** das Verfahren ferner aufweist:
- das Verbinden (304) einer Welle des elektromechanischen Energieumwandlers, der zu testen ist, mit einer dritten drehbaren Verbindungsschnittstelle des Prüfstands und
- das Antreiben (305) des Prüfstands, um eine mechanische Testleistung zu dem zu testenden elektromechanischen Energieumwandler zuzuführen,
wobei sich die erste drehbare Verbindungsschnittstelle um mehrere Umdrehungen während einer einzelnen Umdrehung der zweiten mechanischen drehbaren Verbindungsschnittstelle und während einer einzelnen Umdrehung der dritten mechanischen drehbaren Verbindungsschnittstelle dreht.

12. Verfahren nach Anspruch 11, wobei das Verfahren ferner das Einstellen des Übersetzungsverhältnisses des Prüfstands so aufweist, dass es dem Übersetzungsverhältnis des zu testenden Getriebes entspricht, mithilfe einer Differenzialgetriebestufe mit ersten und zweiten drehbaren Elementen, die einen Teil der geschlossenen mechanischen Leistungsschleife bilden und deren gegenseitige Drehgeschwindigkeitsdifferenz von der Drehgeschwindigkeit eines dritten drehbaren Elements der Differenzialgetriebestufe abhängig ist und wobei das Testdrehmoment auf das zu testende Getriebe durch das Steuern eines Drehmoments ausgeübt wird, das auf das dritte drehbare Element wirkt, wenn das dritte drehbare Element sich dreht.

13. Verfahren nach Anspruch 12, bei dem die Differenzialgetriebestufe ein Planetengetriebe ist, wobei eine Sonnenradwelle und ein Getriebering des Planetengetriebes das erste und zweite drehbare Element sind und wobei ein Planetenradträger des Planetengetriebes das dritte drehbare Element ist.

14. Verfahren nach Anspruch 12, wobei das Drehmoment, das auf das dritte drehbare Element wirkt, mit einem System gesteuert wird, das eine elektrische Maschine und eine elektrische Umwandlungseinrichtung aufweist, welche die elektrische Maschine auf der Grundlage einer Differenz zwischen dem Drehmoment der elektrischen Maschine und einem Bezugsdrehmoment steuert.

15. Verfahren nach Anspruch 14, bei dem das Bezugsdrehmoment entsprechend einer Situation verändert wird, in der die Drehgeschwindigkeit der elektrischen Maschine eine obere Geschwindigkeitsgrenze oder eine untere Geschwindigkeitsgrenze erreicht, wobei das Bezugsdrehmoment in einer Richtung verändert wird, dass die Drehgeschwindigkeit zu einem Geschwindigkeitsfenster zurückgeführt wird, das mit den oberen und unteren Geschwindigkeitsgrenzen definiert wird.

## Revendications

1. Banc d'essai pour tester une boîte de vitesses et un convertisseur d'énergie électromécanique, le banc d'essai comprenant :
- un système d'engrenages (101, 201) comprenant des première et deuxième interfaces de liaison rotatives (102, 103, 202, 203) appropriées pour être reliées à des arbres d'entrée et de sortie de la boîte de vitesses qui est testée,
un arbre de transmission de puissance (104, 204) constituant, avec le système d'engrenages et la boîte de vitesses qui est testée, une boucle d'entraînement fermée mécanique lorsque la boîte de vitesses qui est testée est reliée aux première et deuxième interfaces de liaison rotatives,
- un équipement de charge (105 à 107, 205 à 207) pour appliquer un couple de test à la boîte de vitesses qui est testée, et
- au moins un moteur d'entraînement (108 à 111, 208 à 211) pour entraîner le banc d'essai,
**caractérisé en ce que** le système d'engrenages comprend de plus une troisième interface de liaison rotative (112, 212) appropriée pour être reliée à un arbre du convertisseur d'énergie électromécanique qui est testé, et **en ce que** le système d'engrenages est agencé de façon à produire des rapports de vitesse, de telle sorte que la première interface de liaison rotative soit agencée de façon à effectuer de nombreuses rotations durant une rotation unique de la deuxième interface de liaison rotative et durant une rotation unique de la troisième interface de liaison rotative.

2. Banc d'essai selon la revendication 1, dans lequel la première interface de liaison rotative est agencée de façon à effectuer au moins 20 rotations durant une rotation unique de la deuxième interface de liaison rotative et durant une rotation unique de la troisième interface de liaison rotative.

3. Banc d'essai selon la revendication 1, dans lequel la première interface de liaison rotative est agencée de façon à effectuer au moins 100 rotations durant une rotation unique de la deuxième interface de liaison rotative et durant une rotation unique de la troisième interface de liaison rotative.

4. Banc d'essai selon l'une quelconque des revendications 1 à 3, dans lequel le banc d'essai comprend au moins un autre arbre de transmission de puissance (113, 213) constituant, avec le système d'engrenages et la boîte de vitesses qui est testée, au moins une autre boucle d'entraînement fermée mécanique.

5. Banc d'essai selon l'une quelconque des revendications 1 à 4, dans lequel l'équipement de charge comprend :
- un étage d'engrenages différentiels (105, 205) pour adapter le rapport de vitesse du banc d'essai de façon à correspondre au rapport de vitesse de la boîte de vitesses qui est testée, l'étage d'engrenages différentiels comprenant des premier et deuxième éléments rotatifs (114, 115) qui font partie de la boucle d'entraînement fermée mécanique, et dont la différence de vitesse de rotation mutuelle dépend de la vitesse de rotation d'un troisième élément rotatif (116) de l'étage d'engrenages différentiels, et
- un dispositif de commande (106, 107, 206, 207) relié au troisième élément rotatif de l'étage d'engrenages différentiels, et agencé de façon à commander un couple agissant sur le troisième élément rotatif lorsque le troisième élément rotatif tourne, de façon à appliquer le couple de test à la boîte de vitesse qui est testée.

6. Banc d'essai selon la revendication 5, dans lequel l'étage d'engrenages différentiels (105, 205) est un engrenage planétaire, un arbre de roue solaire et une couronne dentée de l'engrenage planétaire constituant les premier et deuxième éléments rotatifs, et un porte-satellites de l'engrenage planétaire constituant le troisième élément rotatif.

7. Banc d'essai selon la revendication 5, dans lequel le dispositif de commande comprend une machine électrique (106, 206) et un dispositif de convertisseur électrique (107, 207) agencé de façon à commander la machine électrique en fonction d'une différence entre le couple de la machine électrique et un couple de référence.

8. Banc d'essai selon la revendication 7, dans lequel le dispositif de convertisseur électrique est agencé de façon à changer le couple de référence en réponse à une situation dans laquelle la vitesse de rotation de la machine électrique satisfait à une limite de vitesse supérieure ou à une limite de vitesse inférieure, le couple de référence étant changé dans une direction telle que la vitesse de rotation soit rétablie dans une fenêtre de vitesse définie par les limites de vitesse supérieure et inférieure.

9. Banc d'essai selon l'une quelconque des revendications 1 à 8, dans lequel le moteur d'entraînement (108 à 111) est un moteur électrique, et le banc d'essai comprend un autre dispositif de convertisseur électrique (117) agencé de façon à commander la vitesse de rotation du moteur électrique en fonction d'une différence entre la vitesse de rotation du moteur électrique et une vitesse de référence.

10. Banc d'essai selon l'une quelconque des revendications 7 à 9, dans lequel la machine électrique est une machine électrique en courant alternatif et le dispositif de convertisseur électrique est un convertisseur de fréquence.

11. Procédé pour tester une boîte de vitesses et un convertisseur d'énergie électromécanique avec un même banc d'essai, le procédé comprenant :
- la liaison (301) d'arbres d'entrée et de sortie de la boîte de vitesses qui est testée à des première et deuxième interfaces de liaison rotatives du banc d'essai, le banc d'essai constituant avec la boîte de vitesses qui est testée au moins une boucle d'entraînement fermée mécanique,
- l'entraînement (302) du banc d'essai de façon à délivrer des pertes de puissance mécanique à la boucle d'entraînement fermée mécanique, et
- l'application (303) d'un couple de test à la boîte de vitesses qui est testée,
**caractérisé en ce que** le procédé comprend de plus :
- la liaison (304) d'un arbre du convertisseur d'énergie électromécanique qui est testé à une troisième interface de liaison rotative du banc d'essai, et
- l'entraînement (305) du banc d'essai de façon à délivrer un entraînement de test mécanique au convertisseur d'énergie électromécanique qui est testé, dans lequel la première interface de liaison rotative effectue de nombreuses rotations durant une rotation unique de la deuxième interface de liaison rotative et durant une rotation unique de la troisième interface de liaison rotative.

12. Procédé selon la revendication 11, dans lequel le procédé comprend de plus l'adaptation du rapport de vitesse du banc d'essai de façon à correspondre au rapport de vitesse de la boîte de vitesses qui est testée à l'aide d'un étage d'engrenages différentiels comportant des premier et deuxième éléments rotatifs qui font partie de la boucle d'entraînement fermée mécanique, et dont la différence de vitesse de rotation mutuelle dépend de la vitesse de rotation d'un troisième élément rotatif de l'étage d'engrenages différentiels, et dans lequel le couple de test est appliqué à la boîte de vitesses qui est testée par la commande d'un couple agissant sur le troisième élément rotatif lorsque le troisième élément rotatif tourne.

13. Procédé selon la revendication 12, dans lequel l'étage d'engrenages différentiels est un engrenage planétaire, un arbre de roue solaire et une couronne dentée de l'engrenage planétaire constituant les premier et deuxième éléments rotatifs, et un porte-satellites de l'engrenage planétaire constituant le troisième élément rotatif.

14. Procédé selon la revendication 12, dans lequel le couple agissant sur le troisième élément rotatif est commandé par un système comprenant une machine électrique et un dispositif de convertisseur électrique qui commande la machine électrique en fonction d'une différence entre le couple de la machine électrique et un couple de référence.

15. Procédé selon la revendication 14, dans lequel le couple de référence est changé en réponse à une situation dans laquelle la vitesse de rotation de la machine électrique satisfait à une limite de vitesse supérieure ou à une limite de vitesse inférieure, le couple de référence étant changé dans une direction dans laquelle la vitesse de rotation est rétablie dans une fenêtre de vitesse définie par les limites de vitesse supérieure et inférieure.
